# EUROPEAN PATENT APPLICATION

(11) **EP 2 905 714 A1**
(43) Date of publication of application: **12.08.2015**
(21) Application number: 14305163.9
(22) Date of filing: 06.02.2014
(51) Int. Cl.: G06F 21/31, G06F 21/53, G06F 21/74

(54) **Method of and device for securely entering user credentials**

(71) Applicant: Thomson Licensing, 92130 Issy-les-Moulineaux (FR)
(72) Inventor: Winter, Marco, 30659 Hannover (DE); Schewzow, Andrej, 30163 Hannover (DE)
(74) Representative: Lindemann, Robert

(57) **Abstract**

A secure method of entering user credentials for accessing a selected one of one or more services accessed through a device having a microprocessor, a secure memory, a display and an input device, comprises, after selecting the service, placing a cursor or input token in an input field for entering a user name or a password and receiving a user input for causing the device to exclusively execute a secure processing environment. From within the secure processing environment, a list of services accessible by the device, for which user credentials are stored, is provided on the display. A user input is received identifying the currently selected service in the list. From within the secure processing environment, a user name or a password associated with the previously identified service from the secure memory is received and provided to a buffer associated with the input device. A a user input is received for causing the device to stop exclusively executing the secure processing environment, and a further user input is received for transmitting the user name or password from the buffer associated with the input device to the service.

## Description

### Field

The present invention relates to securely entering user credentials, in particular on, but not limited to, mobile devices.

### Background

User credentials are used for preventing unauthorized access to devices and services. Typical user credentials include a user name, which may additionally be combined with an associated password. For preventing unauthorized access, a user will keep the user name and the associated password, if any, to himself. Typical use of user credentials is for accessing a device, web sites on the internet, e.g. online mail clients, shopping portals, bank accounts, and the like. Many users find it very difficult to remember the combination of user name and password for an ever increasing number of services requiring such security measures. This is even more true in light of the general recommendation not to use the same password for any two different services, and to use so-called 'strong' passwords, i.e. long passwords that do not convey any meaning and are interspersed with non-alpha-numeric characters, and which are thus difficult to break using the common attacks. On the other hand it is not advised to carry a list with various combinations of user name and passwords, as it can be lost or stolen and is thus insecure. Using a software providing a password safe may turn out to be inconvenient or not to offer a required level of security.

### Summary

### Technical Problem

The present invention addresses the problem of securely entering user credentials without involving any external components, either communicatively attached to a device through which access to a service is desired, or simply needed for retrieving user credentials and manually entering them.

### Solution to Problem

A user device for accessing a password protected service keeps a reference list comprising combinations of user name and/or password associated with an individual one of one or more services in a protected memory area. The protected memory area may be provided as a separate memory or as a dedicated area in a memory generally provided with a device. Such protected memory areas are known from the prior art and are not addressed hereinafter in detail. Whenever a user needs to enter a user name or password the device switches to a secure processing environment, retrieves the user name or password, and, before switching back to the regular processing environment, transmits the user name or password to the corresponding input field. When switched to the secure processing environment all other processes of the device that may compromise security are interrupted, and only the secure processes are executed. The interrupted processes are not resumed before the exclusive processing of the secure processing environment is terminated.

In this specification the expressions normal mode, regular processing environment, normal processing environment, or non-secure processing environment relate to operating modes in which a common operating system as known to the skilled person controls the components of a device. In contrast, the expression secure processing environment relates to an operating mode in accordance with the invention, in which only a limited functionality is available, which limited functionality provides reduced access to user and date interfaces, and reduces the number of running processes to those positively known or identified uncompromised. This secure processing environment may interrupt connections between system components and provide its own drivers for controlling used system components.

In accordance with an embodiment of the invention the secure processing environment is only enabled when an input field is activated, e.g. by placing a cursor in an input field. In a development, the secure processing environment is automatically enabled by activating a user credential input field. Such action can be triggered for example by a predetermined location of an input field, or by an attribute assigned to the input field that signals presence of a user credential input field. However, the device may also be switched to the secure processing environment in response to a dedicated user input.

Switching to the secure processing environment may itself require authentication or authorization. This can be implemented by a further user name and/or password, or by means of biometrical identification.

The secure processing environment may also be enabled and run automatically without having to enter a master password or taking an authentication action, but the transfer of the user credentials will require authentication before it is executed. For improved security this variant may also be combined with having to enter a password or authenticate otherwise before entering the secure processing environment. Different types of authentication or different passwords can be used in this context.

In an embodiment, operation of the device in secure processing environment is unambiguously indicated to the user, e.g. by a dedicated indicator light, or a dedicated symbol on a display screen. The latter requires that the secure processing environment has full control over what is shown on the screen, which can be achieved in commonly known ways, e.g. using a separate display driver for dedicated secure processing hardware, or routing data and control over the display through a corresponding task of the secure processing environment.

Such full control is advantageous for other embodiments of the invention as well. Thus, in accordance with one or more of the embodiments, implementations and developments of the invention, or combinations thereof, once the secure processing environment controls all of the device's processes, the display and the input means, e.g. physical or on-screen keyboard, are used and controlled exclusively by the secure processing environment.

According to an implementation of the invention activation of the secure processing environment is done through a dedicated user input, e.g. by a dedicated button or switch, or by simultaneously operating two keys. In an embodiment of the implementation simultaneous operation of two keys is required for a predetermined time, e.g. one or two seconds. Alternatively, the secure processing environment may be activated by gestures captured by a camera or on the touch interface of the screen. Preferably, the general hardware of the device or the general software executed on the general hardware is not involved in detecting the activation of the secure processing environment. Rather, activation of the secure processing environment is detected by a dedicated secure hardware or by a dedicated, secure process running simultaneous or parallel to the general operating software. Once activated, the secure processing environment takes control over all other processes, including halting other processes while only processes associated with the secure processing environment are active.

In an embodiment the user name or password is retrieved by selecting a proxy for the password, and the user cannot see the user name or password in clear. In this embodiment, when the device is operating in secure processing environment, a user is presented a list of passwords. The list of passwords is shown only by proxies, i.e. password names, rather than by showing the passwords in clear. A password name may for example be the name of a service for which the password is required. Once the password is transmitted to the previously selected input field the secure processing environment is terminated, or kept running only as a low priority background task.

If a service that a user wishes to sign in to requires both, user name and password, there are multiple variants for entering the credentials. According to one variant a user has to enter the credentials in a predefined sequence, e.g. user name first, then password. User name and password are transferred in individual actions, after each transfer the secure processing environment passes control to the 'normal' operating mode and takes control again only for the next input field. In this case the user only needs to select the name of the password, e.g. the name of the service, for effecting first the transmission of the user name and then the transmission of the password.

In a variant in which the sequence is not predefined the user will have to select the service and which part of the user credentials is to be transmitted, i.e. user name or password. The remaining steps of the method remain the same, i.e. authentication before entering secure processing mode, or after selecting the user name or password, or both.

In one embodiment, when two or more transfers are performed for transmitting the user credentials, with intermediate returning of control from the secure processing environment to the 'normal' environment, the master password or authentication action granting access to the secure processing environment or authorizing sending the selected user name or password need only be entered or performed once for a predetermined number of sequential transfers of user credentials. In a variant, re-entering a master password or performing the authentication action is only required after a preset time has expired, or after a predetermined number of transmissions has occurred. The time or number of transmissions can be user selectable or user-settable.

In one embodiment, access to the list for reading the user credentials in clear or for modifying the user credentials is protected by individual passwords or authentication mechanisms that are different from those used for retrieving the user credentials for accessing a service. This prevents unauthorized persons from extracting or modifying the user credentials even if they have gained access to the master password for 'normal' operation, i.e. for accessing services, and limits abuse to cases involving an individual device.

In one implementation of the invention transmission of the user name or password to the input field outside the secure processing environment is done by directly writing the user credential into the input buffer of a user input device, e.g. a physical keyboard or an on-screen keyboard, while in the secure processing environment. The buffer content is not used or transferred to the service until after the device control has been handed back to processes outside the secure processing environment. Such control can be effected e.g. by a buffer freeze signal or the like.

In a certain sense the invention is based on a schizophrenic hardware or on schizophrenic processing environments. The conventional hardware or processing environment is one awareness, or personality, and the secure processing environment, irrespective of whether it is implemented in hardware or software, is another awareness, or personality. One of the personalities, the secure processing environment, is the master and has control over the other, which is the slave. The secure processing environment, which, in essence, may be reduced to a password manager function, has total control over user input devices such as touch input or keyboard, and also controls what is reproduced on the display. It can interrupt or enable access from the conventional processing environment to the user input devices and display.

Two general operating modes are possible in the secure processing environment, a first one for adding new passwords or modifying passwords, and a second one for using previously added or modified passwords.

The first one of the general operating modes comprises a sub-mode for entering the newly added password by means of user input devices provided by the device itself, e.g. keyboard or touchscreen, and a further sub-mode for entering the newly added password by reading or importing it from an external source.

When entering and adding the passwords directly, i.e. on user input means provided with the inventive device, the password is entered when the secure processing environment is enabled. Thereby, the user input means is under total control of the secure processing environment, i.e. all other processes running on the inventive device are halted or have no access to the user input means and display. In this sub-mode it is also conceivable to automatically generate a password for a service, e.g. a random password, and store this automatically generated password with the corresponding user name, for accessing a service.

If a password is imported from an external source, e.g. from an external device connected via USB, the secure processing environment disables access of all system components to the USB connection, and exclusively communicates with the external source. This prevents from malicious software that may be active on the inventive device in the non-secure processing mode, e.g. trojans or key loggers, from gaining access to the imported password.

The second one of the general operating modes likewise comprises two sub-modes, one for entering the password into a password field when a service requiring authentication is accessed through the device, and one for providing the password to a user on the display, e.g. in case the password needs to be entered on an external device that is not connected with the inventive device.

In one embodiment of the method, when a service requiring authentication, for example an application running on the device or a web page opened in a browser, is accessed through a device in accordance with the invention, and the user input is received on the device, the user first inputs a user name in a corresponding input field. Then the user places a cursor or input token on a password field and switches to the secure processing environment. In this mode, the user selects the service from a list of services, and the password stored for the password in the secure processing environment is automatically provided to the input field. Alternatively to manually entering the user name, the user name may also be provided by the secure processing environment. The procedure is similar to the one for entering the password, and is preceded by the user placing a cursor or input token in the user name field. Then, once the secure processing environment is active, the user only needs to select the service, and the user name is automatically provided to the input field. This removes the requirement of remembering the user name for a service. Once the user name is entered, the procedure is repeated for the password.

The invention can be used on a number of devices including mobile devices such as smartphones and tablets. However, the invention can also be used in connection with a general PC or a terminal having display and keyboard attached thereto. In the latter case a device in accordance with the invention is connected between the PC, or terminal, and the display and keyboard. The connection may be done via USB or serial connection for the keyboard and DVI, HDMI, DisplayPort or the like for the display. During normal operation, i.e. in non-secure processing environment, the inventive device simply passes through data coming from the keyboard and going to the display. Once a dedicated button on the device or a special keyboard shortcut activates the password manager the device intercepts and manipulates user inputs and display content in the way described above.

Any two or more embodiments, implementations or variants of the method or of the device in accordance with the invention discussed hereinbefore can be combined for further increasing the security or convenience of operation.

### Advantageous Effects

The present invention prevents the passwords from being visible at any time, and avoids using insecure transfer means such as copy and paste mechanisms. The user name or password is not accessible by any other software on the device. Even very complex or long passwords, unique ones for each service, can be used without running danger of confusing passwords for different services. Actually, the user need not even remember the password or user name. Existing input fields of existing services or applications need not be modified, since the activity of the secure processing environment is totally invisible to and therefore independent of the service or application. The secure processing environment, when active, takes control over the entire system, inter alia by permanently observing all user interfaces, i.e. display, keyboard, touch screen etc., executing exclusive control over indicators, and thus malicious processes or programs cannot interfere or access data.

### Brief Description of Drawings

In the following the invention will be described with reference to the drawings, in which
- Fig. 1: shows various screens during entering user credentials in accordance with one aspect of the invention;
- Fig. 2: shows various screens during entering user credentials in accordance with another aspect of the invention;
- Fig. 3: shows various screens during entering user credentials in accordance with yet another aspect of the invention;
- Fig. 4: depicts an exemplary block diagram of a device in accordance with the invention;
- Fig. 5: represents a flow diagram of an aspect of the method in accordance with the invention; and
- Fig. 6: represents a flow diagram of another aspect of the method in accordance with the invention.

### Description of Embodiments

In the figures like elements carry the same reference numerals.

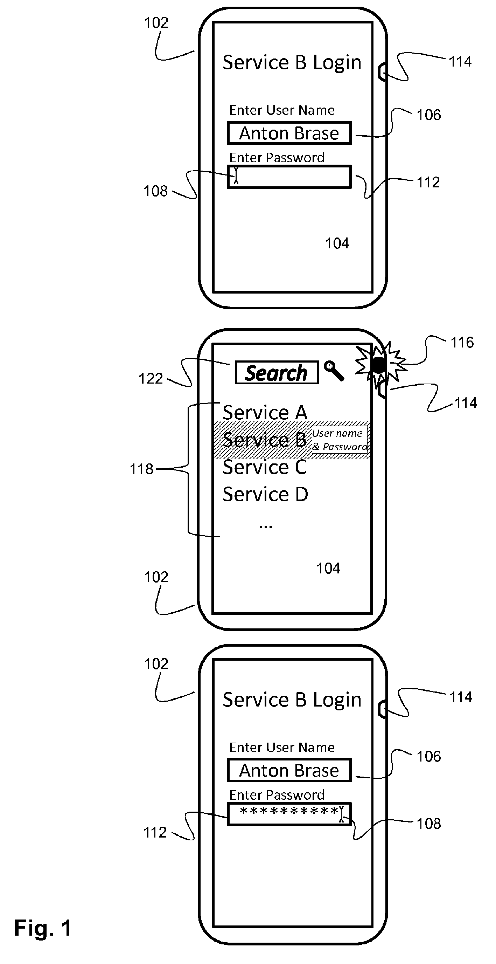

Figure 1 shows various screens 104 on a device 102 implementing the method in accordance with the invention during entering a password for accessing a service.

On the topmost screen shown in figure 1 a user had previously opened a login page for a service requiring user credentials. In the figure the login page covers the entire screen, but this is generally not essential for the invention. In all embodiments of the invention the login page may also cover only a fraction of the screen or a window. Generally and in accordance with any embodiment of the invention, the login page may be provided in a web browser or by a dedicated application. The user also previously had entered the user name required for logging in into a dedicated user name field 106, and placed a cursor 108 in an input field 112 for the password. The user now presses a button 114 for switching to the secure processing environment.

The middle screen depicted in figure 1 shows the display 104 of the device after switching to the secure processing environment. A dedicated indicator 116 informs the user about the device operating in the secure processing environment. This indicator can be an indicator light, solid or flashing, as shown in the figure, but can also be a dedicated symbol on the screen (not shown). A list 118 of services, for which user credentials are stored, is shown on screen 104. The user selects the service by the name of the user credentials. In the figure the name of the user credentials corresponds to the name of the service. The selected service is highlighted in the figure by the hashed background. A search window 122 is provided, for example in case the list of services is too long to fit on a single screen page. Alternatively, the search window may be hidden in case the list fits on one screen page.

Once the user has selected the proper user credentials for the service the device is switched back to 'normal' operation, i.e. leaves the exclusive secure processing environment. The bottom screen shown in figure 1 shows display 104 after switching back. Input field 106 shows the previously entered user name. Input field 112 shows the password as provided by the selection in the secure processing environment. As with most password input fields, the actual password is not shown in clear but represented by asterisks or the like. Cursor 108 is waiting for a user input for completing the login process. However, as with any of the embodiments described in this specification, the completion of the login process can as well be automatically initiated once the password has been provided by the secure processing environment.

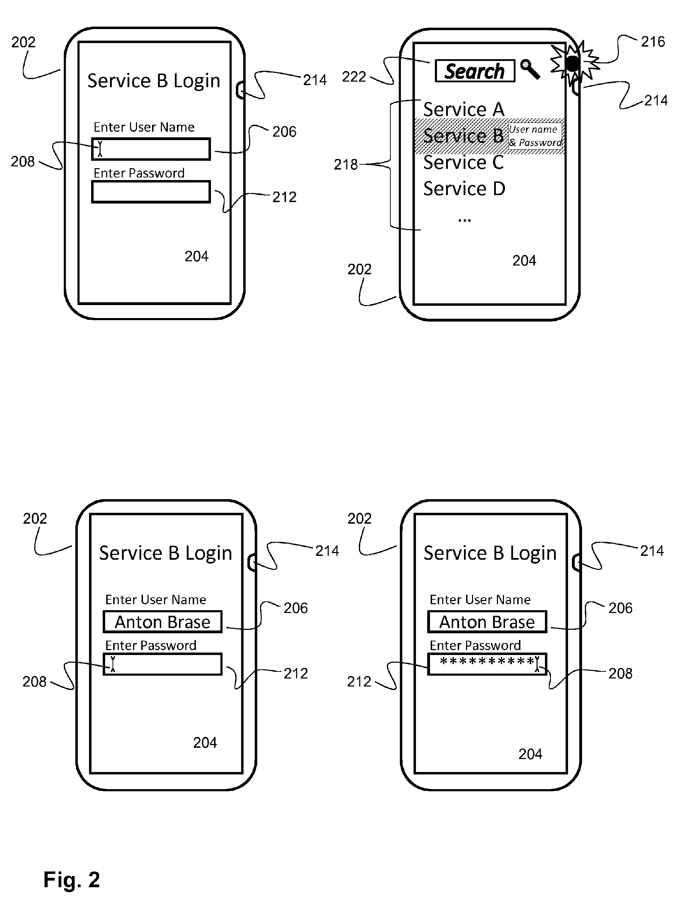

Figure 2 shows various screens 204 on a device 202 implementing the method in accordance with another aspect of the invention during entering user credentials for accessing a service. The initial screen shown top left of figure 2 is similar to the one discussed with reference to figure 1. A user had previously opened a login page for a service requiring user credentials. Unlike as shown in figure 1 the user name is not yet entered. Cursor 208 is placed in the input field for the user name, and the user operates button 214 for switching to the secure processing environment. The top right screen of figure 2 shows the display after the device has entered the secure processing environment. For increased security, in accordance with one aspect of the invention, the secure processing environment is only enabled and executed after the user has entered a specific password, or gesture, or has authenticated himself or herself through biometric user recognition, or the like. This security measure can be employed with any of the embodiments discussed in this specification, either exclusively or as an additional security measure. Like discussed with reference to figure 1 a dedicated indicator 216 informs the user about the device operating in the secure processing environment. A list 218 of services, for which user credentials are stored, is shown on screen 204. The user selects the service by the name of the user credentials. In the figure the name of the user credentials corresponds to the name of the service. The selected service is highlighted in the figure by the hashed background. A search window 222 is provided, for example in case the list of services is too long to fit on a single screen page. Alternatively, the search window may be hidden in case the list fits on one screen page.

Once the user has selected the proper user credentials for the service the device is switched back to 'normal' operation, i.e. leaves the exclusive secure processing environment, and the user name is transferred to user name field 206. The corresponding screen is shown in the lower left part of figure 2. The user now places cursor 208 in password field 212 and returns to the secure processing environment. This time the secure processing environment may be entered and executed without the user having to authenticate himself or herself again. The requirement to re-authenticate may also be controlled by a timer providing a predetermined time period during which re-authentication is not required. This time period may be user settable. However, for increased security a user authentication for entering and executing the secure processing environment may be required each time.

The secure processing environment has maintained the previous service selection, provides the password associated with the previously provided user name for insertion into password field 212, and switches back to the 'normal' operation. Once switched back to 'normal' operation the password field is filled with the password provided by the secure processing environment, as shown in the lower right screen of figure 2. Like in figure 1, as with most password input fields, the actual password is not shown in clear but represented by asterisks or the like. Cursor 208 is waiting for a user input for completing the login process.

Switching back and forth for sequentially entering user name and password need not be triggered by dedicated user interaction. It is also possible to provide both, user name and password, to an intermediate storage, properly separated by a dedicated character or the like. The user name is filled automatically into the previously selected input field after selecting the service from a list, and the password is only filled after a different input field has been selected. The intermediate storage is, for example, a keyboard buffer. Reading out the keyboard buffer is controlled so as to stop a first reading at the separating character, and continue only after the next input field has been selected.

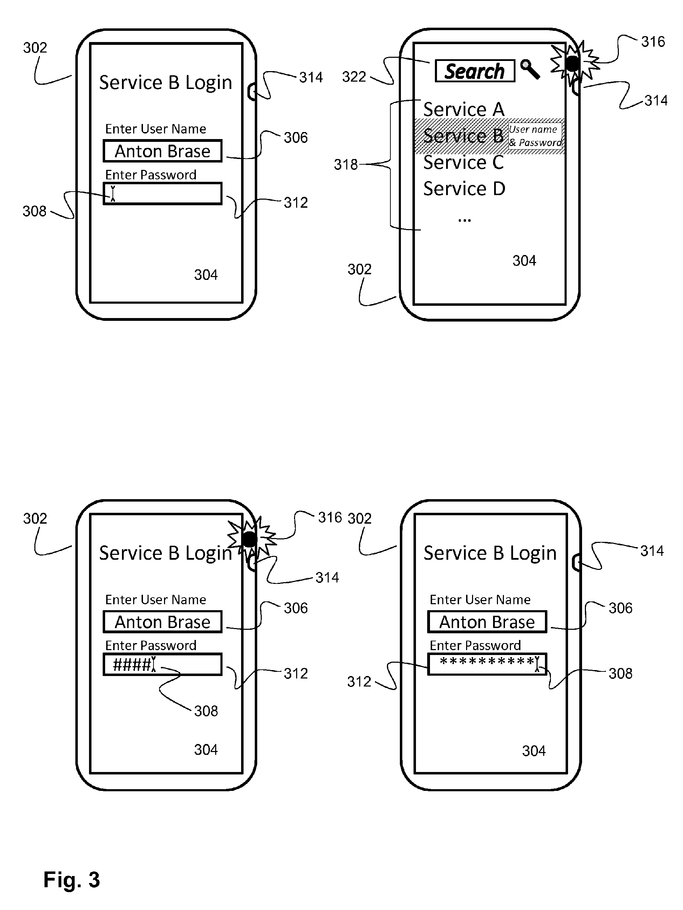

Figure 3 shows various screens 304 on a device 302 implementing the method in accordance with yet another aspect of the invention during entering user credentials for accessing a service. The initial screen shown top left of figure 3 is similar to the one discussed with reference to figure 1. A user had previously opened a login page for a service requiring user credentials, entered a user name required for logging in into a dedicated user name field 306, and placed cursor 308 in input field 312 for the password. The user now presses a button 314 for switching to the secure processing environment. The top right screen of figure 3 shows the display after the device has entered the secure processing environment. Like discussed with reference to figure 1 a dedicated indicator 316 informs the user about the device operating in the secure processing environment. A list 318 of services, for which user credentials are stored, is shown on screen 304. The user selects the service by the name of the user credentials. In the figure the name of the user credentials corresponds to the name of the service. The selected service is highlighted in the figure by the hashed background. As in the previous examples a search window 322 is provided, for example in case the list of services is too long to fit on a single screen page. Alternatively, the search window may be hidden in case the list fits on one screen page. The user now returns to the login screen, shown in the lower left screen of figure 3. The secure processing environment is still active in the background, as indicated by indicator 316, and intercepts all user inputs. The user now enters the master password for the secure processing environment, shown by the hash signs in input field 312 and cursor 308 at the current input position. The secure processing environment intercepts the input master password. Turning to the lower right screen of figure 3, once the master password is completely entered, the secure processing environment replaces the master password with the proper password for the previously selected service, indicated by the asterisks in input field 308. The secure processing environment, including intercepting of user inputs, is stopped and 'normal' operation is entered. Like in the previous examples, the login may be completed automatically, or only after a user has confirmed the password is fully entered.

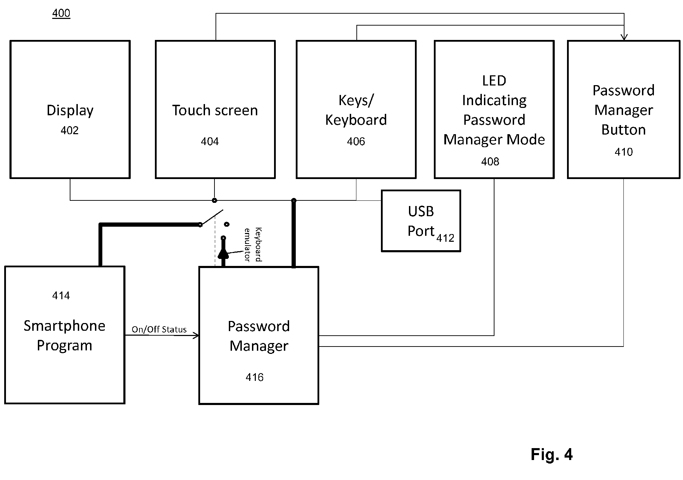

Figure 4 depicts an exemplary block diagram of a device 400 in accordance with the invention. Device 400 comprises a display 402, a touch screen 404 and a user input device 406, which are shown here as keyboard or a number of keys. Device 400 further comprises a password manager 416 and a general hardware 414 running general operation software, which general operation software may be integrated in the operating system of the device and include one or more applications running on the operating system. Further, device 400 may comprise a USB port 412. The aforementioned components are coupled via a bus system, for exchanging data and commands.

Device 400 yet further comprises a user input device 410 for activating the secure processing environment, e.g. a dedicated button, and an indicator 408 informing the user of the operating mode of the device, i.e. if the secure processing environment is activated or inactive. Indicator 408 is controlled by password manager 416, and user input device 410 is communicatively connected to password manager 416, for enabling and executing the secure processing environment. The connections between touch screen 404 and, and user input device 406 and user input device 410, respectively, indicate other ways of activating the secure processing environment, e.g. by a dedicated gesture, or simultaneous operation of keys on the device in a manner as described further above.

Password manager 416 controls a switch, which may be implemented in hardware or software, or a combination thereof, for selectively enabling or disabling access of general operation software 414 to the bus system or to the components coupled via the bus system. Password manager 416 includes a keyboard emulator which, when the secure processing environment is enabled and active and access of general hardware 414 and the general operation software running thereon, to the bus system or to the components coupled via the bus system is disabled, is the only input source to general operation software 414. In this situation any user input generated through operating touch screen 404 or input device 406 is routed through password manager 416 to the general operating software. Routing through password manager 416 includes replacing user input received with input generated or obtained from a database, or with processed versions of previously received user input.

In all embodiments or implementations of the invention the password manager uses its own drivers for user interface components, for ensuring proper isolation from the non-secure processing environment. These components may be simpler and provide less performance than the drivers for the normal environment. Also, these drivers may receive updates less often, or may not even be updated at all.

Password manager 416 further has an input connection via which the status of the device, i.e. on or off, is communicated. When the device is off password manager 416 may still be active and have exclusive control over USB connection 412. In this mode passwords can be transferred to or from external sources, while the remaining functions of the device are disabled. Preferably, importing and exporting of passwords from and to external devices need to be manually enabled, initiated and approved by the user in the password manager mode. Advantageously, the transferred data is automatically encrypted. The appropriate password for this encrypted data may automatically be stored in the password manager. Standard file formats may be supported, like kdbx for KeePass database files. Even synchronization processes with another kdbx file may be performed by reading the external database, opening with password, synchronizing with internal database, then writing back to external source. So, during the synchronization the kdbx file is never opened outside the password manager and therefore always protected.

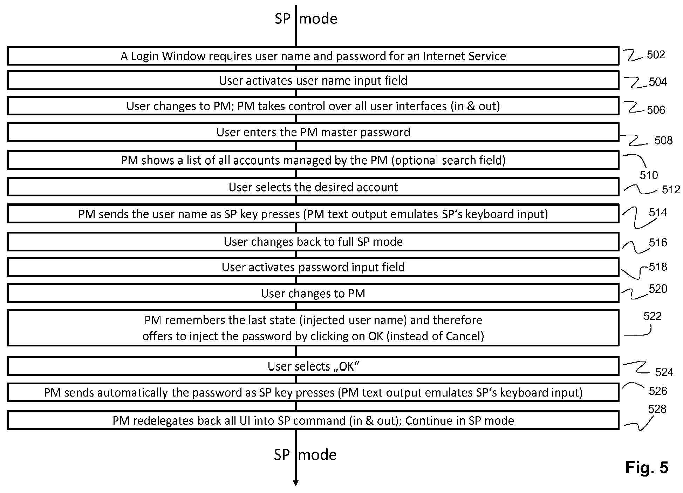

Figure 5 represents a flow diagram of an aspect of the method in accordance with the invention. While in a standard prosecution environment, referred to as SP mode, a login window requires a user name and password be entered for an internet service, step 502. In step 504 the method accepts an input from the user activating a user name input field, e.g. placing a cursor or input token in the field, and further accepts a command to activate the secure processing environment, here referred to as PM, or password manager, step 506. The password manager takes exclusive control over all user interfaces, input and output. Before the password manager provides the user name to the login window the method accepts an input from the user for authentication to the password manager, e.g. by entering a master password, step 508. Upon authentication the password manager displays, to the user, a list of all accounts or services for which user credentials are stored, step 510. Alternatively or additionally the password manager provides a search field for locating the account or service. Once the proper account or service is located the method accepts a user input selecting it, step 512, and the password manager provides a user name associated with the service to the input field, step 514. The user name is provided for example by emulating the keyboard or touch screen and passing the emulated input to the standard processing environment via corresponding keyboard or input buffers. This step may also include leaving the secure processing environment, if required for entering the user name, step 516. Then the method accepts a user input for activating the password input field, step 518, and for returning to the secure processing environment, step 520. Back in the secure processing environment the password manager 'remembers' the last selected service and the fact that the user name for the service was previously provided and accepts a user input for providing the corresponding password, step 522. Alternatively, a user input for cancelling the operation is accepted. In response to a positive user input for continuing the operation, step 524, the password manager transmits, in step 526, the password in the same manner as previously done for the user name, and returns control to the normal or standard processing environment, step 528.

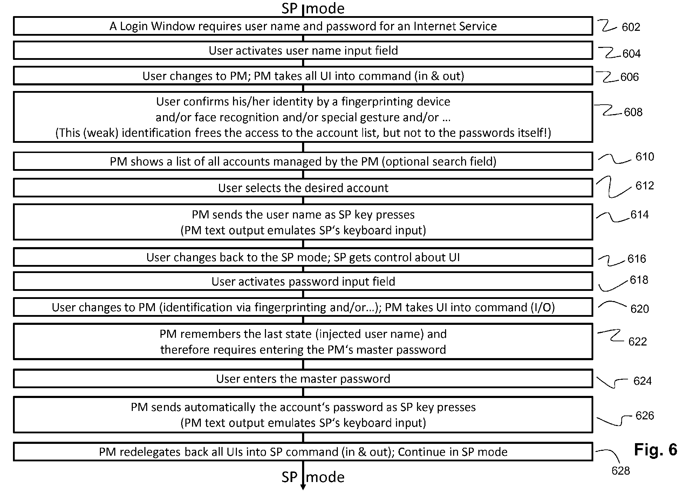

Fig. 6 represents a flow diagram of another aspect of the method in accordance with the invention. Like in figure 5, while in a standard prosecution environment, referred to as SP mode, a login window requires a user name and password be entered for an internet service, step 602. In step 604 the method accepts an input from the user activating a user name input field, e.g. placing a cursor or input token in the field, and further accepts a command to activate the secure processing environment, here referred to as PM, or password manager, step 606. Unlike in figure 5 the user authentication is not done by entering a password, but using other authentication methods. In figure 6 the user authentication is done by accepting biometrical input, e.g. fingerprinting or face recognition, or by a special gesture on the touch screen or in front of a camera. The next steps are similar to those discussed with reference to figure 5. Upon authentication the password manager displays, to the user, a list of all accounts or services for which user credentials are stored, step 610. Alternatively or additionally the password manager provides a search field for locating the account or service. Once the proper account or service is located the method accepts a user input selecting it, step 612, and the password manager provides a user name associated with the service to the input field, step 614. The user name is provided for example by emulating the keyboard or touch screen and passing the emulated input to the standard processing environment via corresponding keyboard or input buffers. This step may also include leaving the secure processing environment, if required for entering the user name, step 616. Then the method accepts a user input for activating the password input field, step 618, and for returning to the secure processing environment, step 620. This step may require a further authentication of the type as discussed before with reference to step 608. Back in the secure processing environment the password manager 'remembers' the last selected service and the fact that the user name for the service was previously provided and accepts a user input for eventually providing the corresponding password, step 622. This user input is different from the one required for activating the secure processing environment, e.g. a master password. In response to a valid master password or user input for continuing the operation, step 624, the password manager transmits, in step 626, the password in the same manner as previously done for the user name, and returns control to the normal or standard processing environment, step 628.

## Claims

1. A secure method of entering user credentials for accessing a selected one of one or more services accessed through a device having a microprocessor, a secure memory, a display and an input device, comprising:
- after selecting the service, placing a cursor or input token in an input field for entering a user name or a password;
- receiving a user input for causing the device to exclusively execute a secure processing environment;
- from within the secure processing environment, providing, on the display, a list of services accessible by the device, for which user credentials are stored, and receiving a user input identifying the currently selected service in the list;
- from within the secure processing environment, retrieving a user name or a password associated with the previously identified service from the secure memory;
- providing the retrieved user name or password to a buffer associated with the input device;
- receiving a user input for causing the device to stop exclusively executing the secure processing environment; and
- receiving a user input for transmitting the user name or password from the buffer associated with the input device to the service.

2. The method of claim 1, wherein the password is entered using the secure method only after the user name had been entered in a conventional way.

3. The method of claim 1, wherein, if both user name and password are required for accessing a service, the method is first executed for entering the user name and repeated for entering the password.

4. The method of claim 1, wherein receiving a user input for causing the device to exclusively execute the secure processing environment, or providing the user name or password to the buffer comprises an authentication or authorization step.

5. The method of claim 4, wherein the authentication or authorization step comprises one or more of entering a further user name and/or password, or a biometrical authentication and authorization.

6. The method of claim 1, wherein causing the device to exclusively execute a secure processing environment comprises:
- interrupting processes executed by the microprocessor that are not associated with the secure processing environment.

7. The method of claim 1, wherein causing the device to stop exclusively executing the secure processing environment comprises:
- resuming execution of previously stopped processes executed by the microprocessor that are not associated with the secure processing environment.

8. The method of claim 1, wherein the user input for causing the device to exclusively execute a secure processing environment is automatically generated by placing the cursor in the input field.

9. The method of claim 8, wherein the automatic generation of the user input is assisted by evaluating the location of the input field on the display or by an attribute automatically provided upon the location of the cursor in the input field.

10. The method of claim 1, wherein the list of services accessible by the device as well as user names and passwords associated with one or more of the services are stored in a secure area of a general memory of the device.

11. A device for accessing a service comprising a microprocessor, a display, an input device adapted for receiving user input, a non-volatile memory and a random access memory operatively coupled with the microprocessor, and a data interface for connecting to a service, wherein the non-volatile memory stores program code which, when executed, performs the method of any one of the preceding claims.

12. The device of claim 11, wherein the input device comprises a physical keyboard or an on-screen-keyboard.
